Europäisches Patentamt

European Patent Office

Office européen des brevets

(11) Veröffentlichungsnummer: **0 006 424**
**A1**

(12) **EUROPÄISCHE PATENTANMELDUNG**

(21) Anmeldenummer: **79101128.1**

(22) Anmeldetag: **12.04.79**

(51) Int. Cl.³: **B 65 G 25/02**

(30) Priorität: **21.04.78 DE 2817491**

(43) Veröffentlichungstag der Anmeldung: **09.01.80**
Patentblatt 80/1

(84) Benannte Vertragsstaaten: **BE CH DE FR GB IT LU NL SE**

(71) Anmelder: **Karl Wintermeyer Automationsanlagen GmbH, Hagenauer Strasse 21, D- 6200 Wiesbaden (DE)**

(72) Erfinder: **Kubik, Frantisek, Lippestrasse 16, D-6200 Wiesbaden-Schierstein (DE)**

(54) **Pilgerschrittförderer.**

(57) Ein Pilgerschrittförderer ist versehen mit einer Ablageeinrichtung (1) mit mindestens zwei auf einer geraden Verbindungslinie in Abstand voneinander angeordneten Ablagepositionen (2) für das Fördergut (5), einem zu der Verbindungslinie der Ablageposition parallel geführten Hubbalken (3) mit einer oder mehreren Aufnahmepositionen (4) für das Fördergut (5), sowie einem Antrieb mit einem Getriebe (14), über welches die Hubbalken (3), relativ zur Ablageeinrichtung (1) ein in einer die Verbindungslinie der Ablageposition enthaltenen Ebene zyklisch wiederholbarer, in sich geschlossener Bewegungsablauf (6) erteilbar ist, bei dem jede Aufnahmeposition des Hubbalkens zwei Ablagepositionen (2) der Ablageeinrichtung (1) jeweils in entgegengesetzter Richtung durchläuft, deren Abstand den Förderschritt bildet.

Um einen Pilgerschrittförderer dieses Typs zu schaffen, dessen Bewegungsablauf nur stetige Übergänge aufweist und dessen Bewegungsablauf in seinen einzelnen Abschnitten den Erfordernissen der schrittweisen Weiterförderung von Werkstücken (5) und der zwischenzeitlich möglichst auf kürzestem Wege erfolgenden Rückführung des Hubbalkens in die Ausgangsposition bestens angepasst ist, ist die Bewegungsbahn (6) jeder der Aufnahmepositionen eine elipsenähnliche Bahn (6) deren Hauptachse (7) in etwa durch zwei im Förderschritt im Abstand voneinander angeordneten Ablagepositionen (2) gebildet wird.

0006424

Die Erfindung betrifft einen Pilgerschrittförderer mit einer Ablageeinrichtung mit mindestens zwei auf einer geraden Verbindungslinie in Abstand voneinander angeordneten Ablagepositionen für das Fördergut, einem zu der Verbindungslinie der Ablageposition parallel geführten Hubbalken mit einer oder mehreren Aufnahmepositionen für das Fördergut, sowie einem Antrieb mit einem Getriebe, über welches dem Hubbalken, relativ zur Ablageeinrichtung, ein in einer die Verbindungslinie der Ablagepositionen enthaltenen Ebene zyklisch wiederholbarer, in sich geschlossener Bewegungsablauf erteilbar ist, bei dem jede der Aufnahmepositionen des Hubbalkens zwei Ablagepositionen der Ablageeinrichtung jeweils in entgegengesetzter Richtung durchläuft, deren Abstand den Förderschritt bildet.

Pilgerschirttförderer dieser Art werden insbesondere in Transferstraßen für die Herstellung von Maschinen und Maschinenteilen eingesetzt. Sie dienen dazu, taktweise Werkstücke aus einer Bearbeitungsposition oder vorübergehenden Ruheposition in eine andere Bearbeitungsposition oder Ruheposition um eine ganz bestimmte Entfernung weiter zu befördern. Sofern solche Förderer mit mehreren Ablagepositionen in der Ablageeinrichtung und mehreren Aufnahmepositionen auf den Hubbalken bzw. mehreren Hubbalken versehen sind, können sie auch zur vorübergehenden Zwischenspeicherung in taktweise betriebenen Transferstraßen verwendet werden, in-dem vorübergehend leer gelassene Ablagepositionen aufgefüllt und anschließend entsprechend zum Teil wieder leergearbeitet werden können. Dies ist bei taktweise kontinuierlich arbeitenden Produktionsstraßen wünschenswert, um einzelne Bearbeitungsmaschinen beispielsweise zum Werkzeugwechsel u. dergl. kurzzeitig anhalten zu können, ohne den Produktionsbetrieb als solchen zu unterbrechen.

Bei bekannten Pilgerschrittförderern beschreiben die einzelnen Aufnahmepositionen des Hubbalkens in ihrem Bewegungsablauf im allgemeinen eine rechteckige Bahn. Bei einer senkrecht nach oben gerichteten Bewegung hebt dabei der Hubbalken mit einer seiner Aufnahmepositionen ein Werkstück aus einer Ablageposition heraus, fördert es dann über eine bestimmte horizontale Entfernung vorwärts, senkt sich wieder senkrecht ab, um das Werkstück in einer anderen Ablageposition abzulegen, und bewegt sich dann wieder gradlinig in horizontaler Richtung zum Ausgangspunkt zurück.

Mit solchen rechteckigen Bewegungsablaufbahnen kann bei nicht zu kurzen Taktzeiten zufriedenstellend gearbeitet werden. Bei hohen Maschinengeschwindigkeiten mit sehr kurzen Taktzeiten wirken sich jedoch bereits die durch die sprunghaften Beschleunigungsänderungen in den Endpunkten der Bahn erzeugten Massenkräfte nachteilig auf die Funktionstüchtigkeit und die Laufruhe des gesamten Förderers aus. Außerdem sind solche rechteckigen Bewegungsabläufe im allgemeinen nur durch Antriebsvorrichtungen erreichbar, bei denen zwei periodisch unterbrochene, senkrecht zueinander gerichtete Antriebssysteme überlagert werden müssen. Dies führt zu relativ teuren und konstruktionsaufwendigen Antrieben.

Der vorliegenden Erfindung liegt die Aufgabe zugrunde, einen Pilgerschrittförderer des eingangs bezeichneten Typs zu schaffen, dessen Bewegungsablaufbahn nur stetige Übergänge aufweist und der in seiner Gestalt einen Bewegungsablauf aufweist, der in seinen einzelnen Abschnitten den Erfordernissen der schrittweisen Weiterförderung von Werkstücken und der zwischenzeitlich möglichst auf kürzestem Weg erfolgenden Rückführung des Hubbalkens in die Ausgansposition am besten angepaßt ist.

Diese Aufgabe wird bei einem Pilgerschrittförderer des eingangs genannten Typs erfindungsgemäß dadurch gelöst, daß die Bewegungsbahn jeder der Aufnahmepositionen eine elipsenähnliche Bahn ist, deren Hauptachse in etwa durch zwei im Förderschritt in Abstand voneinander angeordnete Ablagepositionen gebildet wird.

Dabei erfolgt das Abheben des Werkstückes aus einer Ablageposition im wesentlichen im Scheitelpunkt der Elipse, in den die Tangente an ihrer Bahn senkrecht gerichtet ist. Die Bewegung wird dann allmählich in die Horizontale umgelenkt, um nach Überschreiten eines Scheitelpunktes dann wieder eine Abwärtskomponente zu erhalten. Im Moment des Ablegens des Werkstückes in der neuen Ablageposition ist die Bewegung dann im zweiten Scheitelpunkt der Elipse wieder senkrecht nach unten gerichtet. Die durch die halbe Länge der Nebenachse bestimmte Höhe der eliptischen Bahn über den Ablagepositionen wird durch das Spiel mitbestimmt, welches erforderlich ist, um die betreffenden Werkstücke sicher aus den Ablegegabeln oder dergl. der einzelnen Ablagepositionen soweit herauszuheben, daß die Werkstücke frei von diesen werden und in ihrer Vorwärtsbewegung nicht behindert sind.

Da es aus diesem Grunde häufig vorkommt, daß für die Bewegungsbahn über den Ablagepositionen eine größere Höhe erforderlich ist, als für das Rückführen des Hubbalkens mit den Aufnahmepositionen unterhalb der Ablagepositionen, weist der Pilgerschrittförderer nach einer bevorzugten Ausführungsform der Erfindung eine elipsenähnliche Bewegungsbahn auf, bei der der oberhalb der Ablageposition sich von der Hauptachse aus erstrekkende Oberabschnitt der Nebenachse der elipsenähnlichen Bahn länger ist, als der sich von der Hauptachse aus in eine Richtung unterhalb der Ablagepositionen erstreckende Unterabschnitt der Nebenachse. Ein solcher Bahnablauf ist den am häufigsten vorkommenden Erfordernissen am besten angepaßt. Die Bahn weist nur stetige Richtungsänderungen auf, ohne sprunghafte Beschleunigungspunkte zu enthalten, und gewährleistet durch den weiteren Bogen im oberen Bereich ein vollständiges Herausheben der Werkstücke aus den Ablagepositionen, während die Bewegungsbahn im unteren Bereich so gestaltet ist, daß die Aufnahmeposition auf möglichst kurzem Wege in ihre Ausgangsstellung zurückgeführt werden können.

Dabei ist es nicht erforderlich, daß der Bewegungsablauf des erfingunsgemäßen Pilgerschrittförderers exakt eliptsich bzw. in Halbelipsen erfolgt. Es kann auch zweckmäßig sein, die Hauptachse der elipsenähnlichen Bahn etwas gegenüber der Verbindungslinie zwischen den Ablagepositionen zu neigen, so daß die Scheitelpunkte der elipsenähnlichen Bahn nicht genau in diese Positionen fallen. Dies kann z.B. wünschenswert sein, wenn ein Werkstück oder Körper eventuell aus Gründen der Stoßfreiheit nicht senkrecht, sondern unter einem gewissen Winkel in eine Ablageposition abgesenkt werden soll.

Bewegungsbahnen der verlangten Art lassen sich beispielsweise durch Kurvenführungen erzeugen. Ein allein nach diesem Prinzip arbeitendes Getriebe würde jedoch verhältnismäßig aufwendig und teuer. Es ist daher ein besonderes Ziel der vorliegenden Erfindung, einen Pilgerschrittförderer mit einem Getriebe zu schaffen, mit welchem sich die erwähnte, asymmetrische, elipsenähnliche Bahn auf einfachste Weise und sogar zwangsläufig erzeugen läßt, ohne daß komplizierte, gekrümmte Kurvenführungen erforderlich wären.

Eine besonders bevorzugte Ausführungsform des erfindungsgemäßten Pilgerschrittförderers besitzt daher ein Getriebe zur Erzeugung dieser elipsenähnlichen Bahn, bestehend aus einem Kurbeltrieb mit in einer zur Ebene der Bewegungsbahn parallelen Ebene umlaufenden Kurbel, deren freies Ende gelenkig mit einer zweiarmigen Kurbelstange verbunden ist, deren eines Ende an den Hubbalken angelenkt ist, und deren anderes Ende in einer Kulissenführung geführt ist, die auf der dem Hubbalken abgewandten Seite des Kurbelbetriebes angeordnet ist. Um eine symmetrische Ablaufbahn zu erhalten, bei der die Endpunkte der Hauptachse im wesentlichen mit zwei im Förderschritt in Abstand voneinander angeordneten Ablagepositionen zusammenfallen, ist die Kulissenführung geradlinig ausgeführt und verläuft in einer zur Verbindungslinie der Ablagepositionen rechtwinkligen Richtung. Die Kurbeln sind zweckmäßigerweise kürzer als die Arme der zweiarmigen Kurbelstange, deren in der Kulissenführung geführter Arm wiederum kürzer ist als der an den Hubbalken angelenkte. Um Schwierigkeiten in der Parallel-Führung des Hubbalkens zur Verbindungslinie der Ablagepositionen zu vermeiden, sieht man vorteilhafterweise zwei dieser Getriebe in praleler Anordnung vor, deren Kurbeldrehpunkte auf einer zur Verbindungslinie der Ablagepositionen parallelen Linie liegen. Die Kurbelstangen können in Abstand voneinander direkt an den Hubbalken angelenkt oder aber über eine Koppel gelenkig untereinander verbunden sein, die ihrerseits am Hubbalken befestigt ist.

Für spezielle Bewegungsabläufe ist es auch möglich, die Kulissen entweder unter einem gewissen Winkel anzuordnen und/oder sie mit einer bestimmten, gekrümmten Ablaufbahn zu versehen.

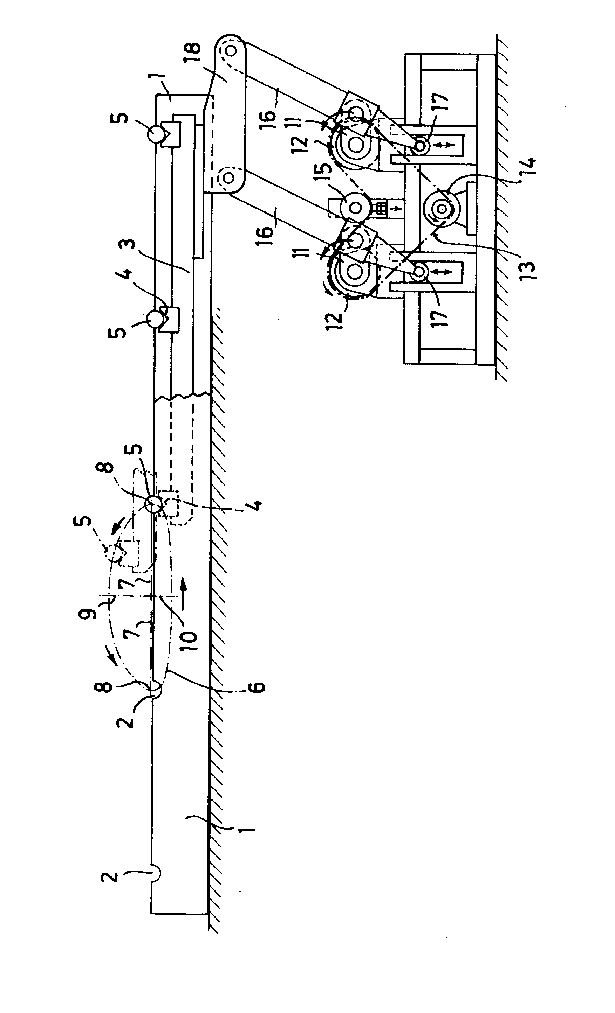

Im folgenden wird eine bevorzugte Ausführungsform unter
Hinweis auf die beigefügte Zeichnung, die die schematische Darstellung eines Pilgerschrittförderers in
Seitenansicht zeigt, im einzelnen erläutert.

Gezeigt ist eine Ablageeinrichtung 1, die aus zwei
parallen, fest im Maschinengestell angebrachten
Ablageschienen bestehen kann, in denen in gleichmäßigen Abständen Ablagepositionen 2 in Form von lagerschalenartigen Ausnehmungen zum Ablegen von Werkstücken
5 angeordnet sind. Zwischen den prallelen Ablageschienen der Ablageeinrichtung 1 ist ein Hubbalken 3 angeordnet, der mehrere Aufnahmepositionen 4, etwa in
Form von Transportgabeln, für die Werkstücke aufweist,
die in gleichen Abständen voneinander angeordnet
sind, wie die Ablagepositionen 2 in der Ablageeinrichtung 1.

Der Hubbalken 3 ist in einer Position gezeigt, in der
seine Aufnahmepositionen 4 praktisch mit den Ablagepositionen 2 in Deckung liegen. Aus dieser Position
heraus führt jede der Aufnahmepositionen einen Bewegungsablauf mit einer elipsenähnlichen Bahn 6 aus, bei
dem die Werkstücke 5 zuerst senkrecht nach oben angehoben,dann, bezogen auf die Zeichnung, zunehmend nach
links bewegt und nach Überschreitung eines Scheitelpunktes langsam wieder abgesenkt werden, wobei die
horizontale Bewegungskomponente verzögert wird, so daß
die Werkstücke in die nächstfolgende Ablageposition
senkrecht abgesenkt werden können. Der Hubbalken bewegt  sich noch etwas weiter nach unten, damit die
Aufnahmepositionen frei von den Werkstücken kommen,
und bewegt sich dann entlang einer verhältnismäßig
flachen, in etwa halbeliptischen Bahn wieder zu seiner
Ausgangsposition zurück. Der Bewegungsbaluf ist durch
Pfeile angedeutet. Die elipsenähnliche Bahn liegt beim gezeigten Ausführungsbeispiel so, daß die die Hauptachse 7 der Bahn begrenzenden Scheitelpunkte 8 in
etwa mit den Ablagepositionen 2 der Ablageeinrichtung
zusammenfallen. Dabei ist die elipsenähnliche Bahn 6
aber asymmetrisch ausgebildet, in-dem der Oberabschnitt 9 ihrer Nebenachse länger ist als der Unterabschnitt lo der Nebenachse.

Das zur Erzeugung dieses Bewegungsablaufes dargestellte Getriebe besteht aus zwei in Abstand voneinander,
und zwar auf einer Linie parallel zum Hubbalken,
angeordneten Kurbeln 11, die über Riemenscheiben 12
und einen gemeinsamen Treibriemen 13 von einem
Antriebsmotor 14 angetrieben sind. Der Treibriemen
13 ist zusätzlich über eine Spannrolle 15 geführt.
Die freien Enden der Kurbeln 11 sind gelenkig mit
zweiarmigen Kurbelstangen 16 verbunden, deren einen,
kürzere Enden in Kulissenführungen 17 geführt und deren
anderen, längere Enden an einer Koppel 18 angelenkt
sind, die fest mit dem Hubbalken 3 verbunden ist.

Die Kulissenführungen 17 sind geradlinig ausgeführt, liegen unterhalb der Drehpunkte der Kurbeln 11
und sind senkrecht zu der Ablageeinrichtung bzw. dem
Hubbalken ausgerichtet.

Die asymmetrisch eliptische Bahn entsteht dadurch, daß
bei einer Aufwärtsbewegung der Kurbel aus einer horizontalen Lage, in der die Kurbelstange verhältnismäßig
schräg liegt, der Kurbelradius quasi durch ein Aufrichten der Kurbelstange verlängert wird, was zu der
verhältnismäßig bauchigen, oberen Hälfte der Elipse
führt, während das gleiche Aufrichten der Kurbelstange
bei der Aufwärtsbewegung der Kurbel aus der Horizontalen den Kurbelradius praktisch verkürzt, wodurch sich der Rücklaufzweig der elipsenähnlichen Bahn abflacht.

Mit dem gezeigten Antrieb wird auf einfache und zwangsläufige Weise eine funktions- und bescheunigungsbegünstigte Bewegungsablaufbahn für einen Pilgerschrittförderer erzeugt.

## Patentansprüche

1. Pilgerschrittförderer mit einer Ablageeinrichtung mit mindestens zwei auf einer geraden Verbindungslinie in Abstand voneinander angeordneten Ablagepositionen für das Fördergut, einem zu der Verbindungslinie der Ablagepositionen parallel geführten Hubbalken mit einer oder mehreren Aufnahmepositionen für das Fördergut, sowie einem Antrieb mit einem Getriebe, über welches dem Hubbalken relativ zur Ablageeinrichtung ein, in einer die Verbindungslinie der Ablagepositionen enthaltenden Ebene zyklisch wiederholbarer, in sich geschlossener Bewegungsablauf erteilbar ist, bei dem jede der Aufnahmepositionen des Hubbalkens zwei Ablagepositionen der Ablageeinrichtung jeweils in entgegengesetzter Richtung durchläuft, deren Abstand den Förderschritt bildet, dadurch gekennzeichnet, daß die Bewegungsbahn jeder der Aufnahmepositionen (4) eine elipsenähnliche Bahn (6) ist, deren Hauptachse (7) in etwa durch zwei im Förderschritt voneinander angeordnete Ablagepositionen (2) gebildet wird.

2. Pilgerschrittförderer nach Anspruch 1, dadurch gekennzeichnet, daß der oberhalb der Ablagepositionen (2) sich von der Hauptachse (7) aus erstreckende Oberabschnitt (9) der Nebenachse der elipsenähnlichen Bahn (6) länger ist als der sich von der Hauptachse (7) aus in eine Richtung unterhalb der Ablagepositionen (2) erstreckende Unterabschnitt (1o) der Nebenachse.

3. Pilgerschrittförderer nach Anspruch 2 dadurch gekennzeichnet, daß das Getriebe zur Erzeugung dieser elipsenähnlichen Bahn (6) besteht aus einem Kurbelbetrieb (11,12) mit einer in einer zur Ebene der Bewegungsbahn prallelen Ebene umlaufenden Kurbel (11), deren freies Ende gelenkig mit einer zweiarmigen Kurbelstange (16) verbunden ist, deren eines Ende an den Hubbalken (3,18) angelenkt ist, und deren anderes Ende in einer Kulissenführung (17) geführt ist, die auf der dem Hubbalken (3) abgewandten Seite des Kurbelbetriebes (11,12) angeordnet ist.

4. Pilgerschrittförderer nach Anspruch 3 dadurch gekennzeichnet, daß die Kulissenführung (17) geradlinig ausgeführt ist und rechtwinklig zur Verbindungslinie der Ablagepositionen (2) verläuft.

5. Pilgerschrittförderer nach Anspruch 3 oder 4 dadurch gekennzeichnet, daß die Kurbel (11) kürzer ist als jeder der beiden Arme der Kurbelstange (16).

6. Pilgerschrittförderer nach einem der Ansprüche 3 bis 5 dadurch gekennzeichnet, daß der in der Kulisse (17) geführte Arm der Kurbelstange (16) kürzer ist als der an den Hubbalken (18,3) angelenkte Arm.

7. Pilgerschrittförderer nach einem der Ansprüche 3 bis 6 dadurch gekennzeichnet, daß zwei parallele Getriebe vorgesehen sind, deren Kurbeldrehpunkte auf einer um Hubbalken (3) parallelen Linie liegen.

0006424

8. Pilgerschrittförderer nach Anspruch 7 dadurch gekennzeichnet, daß die Kurbeln (11) der parallelen Getriebe durch einen gemeinsamen Antrieb (13,14) angetrieben sind.

| | Europäisches Patentamt | **EUROPÄISCHER RECHERCHENBERICHT** | 0006424 Nummer der Anmeldung EP 79 10 1128 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 192 046 (COMEVIR) <br> * Seite 3, Zeile 28 bis Seite 6, Zeile 24; Figuren * <br><br> -- <br><br> US - A - 4 067 450 (J.C. BIRDWELL) <br> * Spalte 4, Zeilen 15-56 * <br><br> -- <br><br> DE - B - 1 752 533 (MOELLER & NEUMANN) <br> * Das ganze Dokument * <br><br> -- | 1,2,8 <br><br><br><br> 1 <br><br><br><br> 2-4,7 |
| A | FR - A - 1 118 506 (P. PERUSAT) <br><br> ---- | 1 |

**KLASSIFIKATION DER ANMELDUNG (Int.Cl.²)**

B 65 G 25/02

**RECHERCHIERTE SACHGEBIETE (Int. Cl.²)**

B 65 G
B 23 Q

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-07-1979 | VAN ROLLEGHEM |

EPA form 1503.1 06.78